(19) Europäisches Patentamt
European Patent Office
Office européen des brevets

(11) **EP 4 636 006 A1**

(12) **EUROPEAN PATENT APPLICATION**

(43) Date of publication:
**22.10.2025 Bulletin 2025/43**

(21) Application number: **24171470.8**

(22) Date of filing: **19.04.2024**

(51) International Patent Classification (IPC):
***C08G 59/42*** *(2006.01)* ***C09D 163/00*** *(2006.01)*

(52) Cooperative Patent Classification (CPC):
**C08G 59/4223; C08G 59/686; C09D 163/00**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Relement B.V.**
**4612 PZ Bergen op Zoom (NL)**

(72) Inventor: **Iannacone, Stefano**
**4612 PZ Bergen op Zoom (NL)**

(74) Representative: **Teunissen, Wendy**
**Level IP**
**Steigerstraat 8**
**2583 LK Den Haag (NL)**

(54) **EPOXY RESIN FORMULATION COMPRISING BIO-BASED AROMATICS**

(57) The invention relates to a resin composition comprising (A) a bio-based 3-MPA and/or DMPA and (B) an epoxy functional binder resin wherein the functional group ratio of A : B is in the range of from 1 : 0.05 to 1 : 10. It further relates to the process for the preparation of a resin composition, wherein at least a bio-based 3-MPA and/or DMPA is added it to an epoxy functional binder, wherein the functional group of A : B is in the range of from 1 : 0.05 to 1 : 10, and wherein the bio-based 3-MPA and/or DMPA is added to the epoxy functional binder, followed by curing. The invention also relates to the use of bio-based 3-MPA and/or DMPA as a curing agent in an epoxy resin composition.

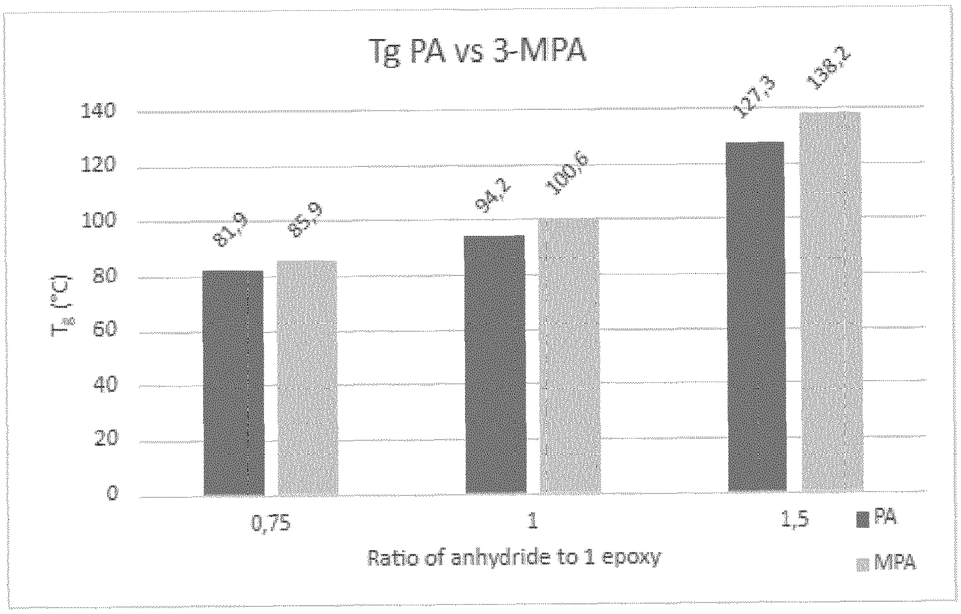


Fig. 1

EP 4 636 006 A1

## Description

Field of the invention

The present invention relates to an epoxy thermoset polymer resin composition comprising bio-based aromatics, more particularly a resin composition containing an epoxy functional binder and a bio-based aromatic comprising 3-MPA and/or DMPA. In addition, the invention relates to the process to prepare such compositions. The invention also relates to the use of bio-based 3-MPA and/or DMPA to improve certain properties in epoxy resins.

Background of the invention

Epoxy resins are widely used in industrial applications such as adhesives, and various moulding materials. Most commercially epoxy resins or epoxy functional binders available are condensation products of bisphenol A (4,4'-isopropylidenediphenol) with epichlorohydrin, cross-linked in combination with a curing agent like amines or anhydrides and optionally a co-polymer and/or a catalyst.

Worldwide there is a growing demand for sustainability, expressed in the use of renewable feedstock and the reduction of the $CO_2$-footprint enhanced properties. As a result, there is an increasing need for sustainable processes for the production of aromatic molecules (e.g. phthalic anhydride derivatives, benzene-tricarboxylic acids etc.). Biomass, which is renewable and $CO_2$-neutral, appears to offer a good opportunity as an aromatic source.

Aromatic building blocks such as aromatic amines and phthalic anhydride (PA) are key ingredients in epoxy resins. These types of compounds are commonly used to cure epoxy resins for many challenging industrial applications, including fibre reinforced composites and thermosets as well as in adhesives and coatings.

Today, aromatics are produced almost exclusively from fossil raw materials. Moreover, in epoxy resins, aromatic anhydrides and di-acids were the only ingredient for which there was no sustainable alternative available. This alternative now becomes available in the form of bio-aromatics, opening the way towards fully biobased epoxy resins.

The production and application of biobased 3-methylphthalic anhydride (bio-MPA) to be used in coatings has been successfully developed, assessed and demonstrated, as renewable alternative for fossil-based phthalic anhydride (PA). For example, in EP-A-4041705, is the preparation of an aromatic product described from a cycloadduct comprising a 7-oxabicyclo[2.2.1]hept-2-ene core structure or from an intermediate, possibly ring-opened compound formed in this process. The starting material for this process are C5 or C6 sugars from biomass comprising (hemi-)cellulose, like glucose, xylose, mannose and arabinose. These sugars offer more potential as a source for renewable aromatics. Said sugars can easily be converted to 2,5-bis(hydroxymethyl)furan, 5-(hydroxymethyl)furfural, 5-methoxymethylfurfural, 5-chloromethylfurfural, 2,5-dimethylfuran, furfural, furfuryl alcohol, 2-methylfuran or furan. Said compounds were showing promising opportunities for a sustainable process to synthesize aromatic compounds. For instance, the furan core of the compounds is able to react as a diene in a Diels-Alder reaction with dienophiles. The cycloadduct formed during said reaction can undergo a ring-opening and be carried on in further processing to yield aromatic products.

EP-A-3844165 discloses a process of preparing aromatic compounds from bio-based furanic compounds. The process is an improved bio-based route from furanic compounds to phthalic anhydride compounds by reacting furfuryl alcohol (i.e. 2-hydroxymethylfuran) or an analogue thereof having a nucleophilic atom on the 2-methyl, with a dienophile comprising an $\alpha,\beta$-unsaturated carbonyl comprising an $\alpha'$-leaving group. The invention further involves preparation of phthalic anhydride compounds, phthalic acid compounds and reduction products of the intermediate phthalide compounds. Although the formation of structures was confirmed, no yields and purity was noted.

The documents that are discussed above about the synthesis of bio based 3-MPA disclose processes that are complicated to implement on pilot plant scale or even larger. Production routes are inefficient or expensive. The batch experiments have limited potential to produce the millions of tons of aromatics required each year by industry.

Accordingly, there is a demand for an optimized epoxy resin formulation comprising bio-based aromatics that performs at least as good as their fossil-based equivalents. There is furthermore a demand for a process to manufacture the resin composition with high amounts of biobased aromatics at larger scale. There is also a demand for improving certain physical properties of the epoxy resins.

Summary of the invention

It is an objective of the invention to address one or more of the disadvantages faced in the prior art. It is another objective of the invention to provide an alternative to the fossil based alicyclic and/or aromatic anhydrides which are suitable for curing epoxy resins. Further objectives include avoiding the formation of unwanted by-products. A particular objective is to provide an efficient and low-cost process for the production of bio-MPA based epoxy resins.

Accordingly, the present invention relates to an epoxy resin composition comprising (A) an epoxy functional binder resin forming poly-epoxide, (B) bio-based 3-MPA and/or DMPA wherein a functional group ratio of A : B is in the

range of from 1 : 0.05 to 1 : 10.

Furthermore, the present invention relates to a process for the preparation of an epoxy resin composition, wherein at least a bio-based 3-MPA and/or DMPA is added to an epoxy functional binder, wherein the functional group of A : B is in the range of from 1 : 0.05 to 1 : 10, and wherein the bio-based 3-MPA and/or DMPA is added to the epoxy functional binder, followed by curing.

The present invention also relates to the use of bio-based 3-MPA and/or DMPA as a curing agent in an epoxy resin composition.

Detailed description of the invention

Unless otherwise defined, all technical and scientific terms used herein have the same meaning as commonly understood by one of ordinary skill in the art to which this invention belongs. The terminology used in the description of the invention herein is for the purpose of describing particular embodiments only and is not intended to be limiting of the invention.

The term "bio-based 3-MPA and/or DMPA" or "bio-MPA" or "bio MPA" as used herein, includes but is not limited to 3-methylphthalic anhydride (3-MPA) (CAS 4792-30-7), 3-methylphthalic acid (3-MPA) (CAS 37102-74-2), 3,6-dimethylphthalic acid (DMPA) (CAS 944-38-7) and 3,6-dimethylphthalic anhydride (DMPA) (CAS 5463-50-3).

The term "functional group" in the epoxy functional binder as used herein, includes the groups that are capable to react with the reactive groups of the bio-based 3-MPA and/or DMPA during the curing. Other terms that can be used are: the anhydride to epoxy ratio for optimum properties tuning (A/E); the anhydride equivalent weight in g/eq (AEW), and the epoxy equivalent weight in g/eq (EEW) These terms are linked to each other via a general equation for calculating the anhydride usage level in an epoxy formulation.

$$Anhydride\ usage = \frac{100 * AEW * \left(\frac{A}{E}\right)}{resis\ EEW} \quad (parts\ per\ 100 grams\ of\ epoxyresin)$$

Generally, when an anhydride reacts with an epoxy resin, 0.85 mole of anhydride per epoxy equivalent is necessary to obtain maximum thermal yield points. When an amine is used as a promoter, the optimum composition is changed, so that 1.0 mole of anhydride per epoxy equivalent is required.

As described above, developments in the area of the production of biobased aromatic molecules, like bio-based 3-MPA and/or DMPA, still need to overcome some scaling issues and purity issues. Meanwhile, applications are more and more tested with sample amounts of 3-MPA and/or DMPA.

The innovative epoxy resin formulation of the invention relates to a final resin composition comprising bio-based 3-MPA and/or DMPA. These molecules are relatively new and up till now available in small amounts only. For application in epoxy resin formulations, it is needed that larger quantities can be produced, otherwise application will remain possible on small scale only.

The bio-based 3-MPA and/or DMPA may for example replace fully or partly fossil based alicyclic and or aromatic anhydrides which are highly suitable for curing epoxy resins. These anhydrides are commonly used to cure epoxy resins in many challenging applications, including in fibre reinforced composites used in mechanically demanding applications like filament wound bearings, along with high performance aerospace and military applications. They also provide excellent electrical properties for use in high voltage applications, as well as in encapsulating electronic components and circuits.

Properties of a cured epoxy resin depend on many factors, for example the starting epoxy functional binder, the curing agent, whether an accelerator is used and what type of accelerator, the ratio of the curing agent to epoxy functional binder, the curing time and curing temperature, and the post-cure times and temperatures. No one formulation or one set of process conditions will yield a cured resin having optimum values for all properties. Therefore, it is preferred to determine the desired properties for the intended end use before choosing a formulation. In general, greater cross linking of the resin raises the heat distortion temperature (HDT), hardness, and chemical resistance, but lowers the impact resistance and flexural strength of the cured product.

The innovative epoxy resin formulation of the invention relates to a resin composition comprising (A) a bio-based 3-MPA and/or DMPA and (B) an epoxy functional binder and a process to prepare such composition. The obtained polymer composition contains the reaction product of one or more epoxy functional binders, one or more anhydride curing agents and optionally one or more co-polymers and optionally one or more catalysts.

Depending on the size of the molecule these epoxy resins may have a moderate viscosity and good processing characteristics. Some of them are liquid at room temperature, such as the ones from Huntsman Advanced Materials (Araldite ®), the so-called GY-240, GY-250 and GY-260. Other epoxy resins can be obtained from for example Spolchemie, or NanYa. The person skilled in the art will be capable of selecting the correct ones based on the information

received from these manufacturers, and tailored to the specific needs. A preferred bisphenol A epoxy resin is poly(bisphenol A-co-epichlorohydrin): it is an epoxy polymer that reacts with for example a fatty acid to form a cationic polymer. It has a high resistance to thermal expansion and inorganic acids, making it a good sealant.

The bio-based 3-MPA and/or DMPA of the invention may also be used to cure the higher weight solid epoxy resins.

Anhydrides generally give excellent high temperature performance, and have been formulated with multifunctional resins such as epoxy phenol novolacs to get high levels of crosslink density and maximum performance properties at high temperature. Typical commercial examples of such epoxy phenol novolacs resins include for example from the DOW Chemical Company D.E.N 439, and from Huntsman Advanced Materials (Araldite ®), the so-called EPN-1179 or EPN-1183. These are all just examples, the skilled person will be able to track down the correct epoxy phenol novolacs for the anticipated application.

The curing of epoxy resins by bio based 3-MPA and/or DMPA is generally triggered by a source of hydroxyl, which can come from for example either a hydroxyl group present on the epoxy resin, trace amounts of water in the formulation and/or through the introduction of a catalyst. Hydroxyl groups and/or accelerators (catalysts) work by opening the anhydride ring to generate the acid, opening the epoxide ring, facilitating the reaction of the acid and the epoxide group and homo-polymerization of the epoxy. As example, the overall reaction mechanism involving 3-MPA as curing agent is depicted in the scheme below.

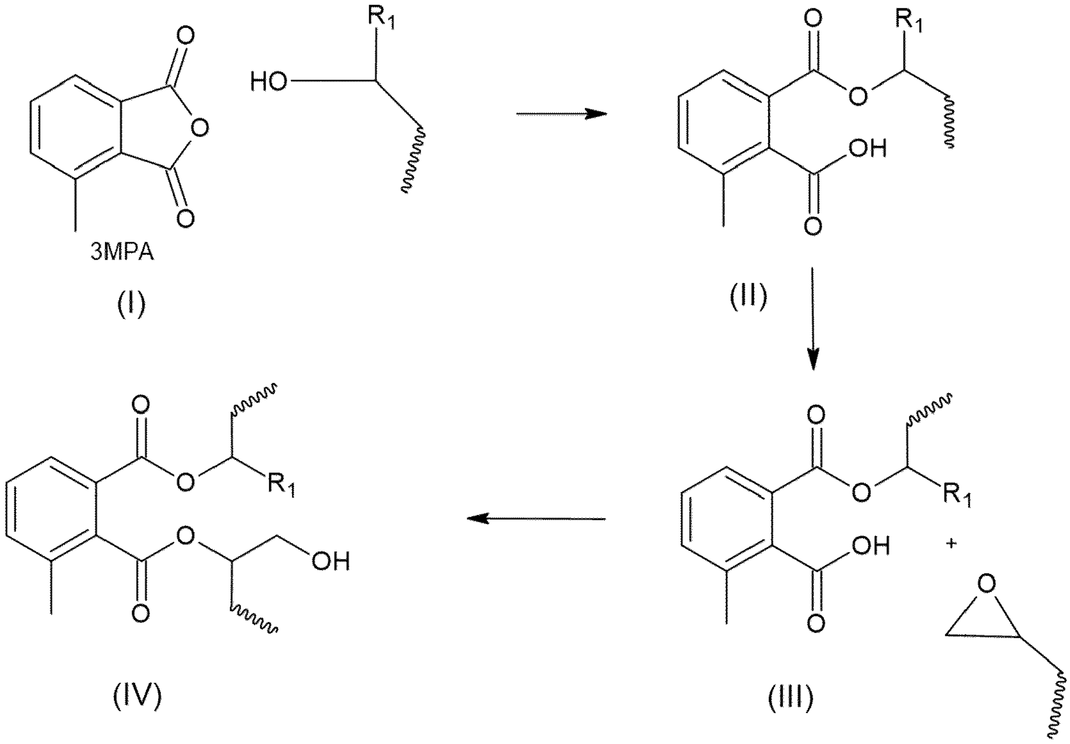
3MPA
(I)
(II)
(IV)
(III)

The above mechanism comprises more steps, explained below with the non-biobased phthalic anhydride. The reaction is initiated through the reaction between the carbonyl of the phthalic anhydride and the hydroxyl group of the epoxide resin (in this case poly(bisphenol A-epichlorohydrin) glycidyl end-capped):

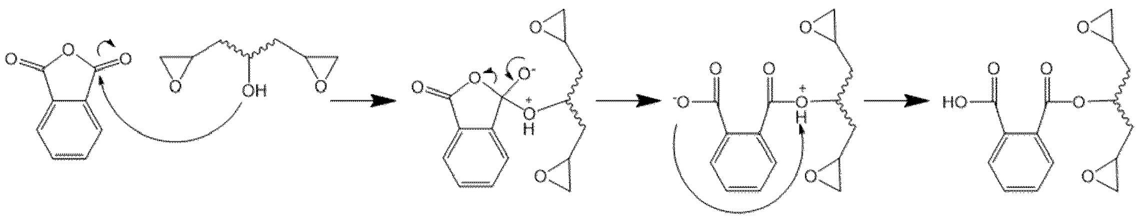

It is generally thought that the limiting factor of the crosslinking reaction is the ring opening of the anhydride. Tertiary amines, amongst other catalysts, are able to accelerate this reaction step, as represented below. Instead of reacting with the hydroxyl group of the resin, the anhydride gets attacked by the tertiary amine (in this case BDMA). This is

followed by some rearrangement, which causes the ring opening.

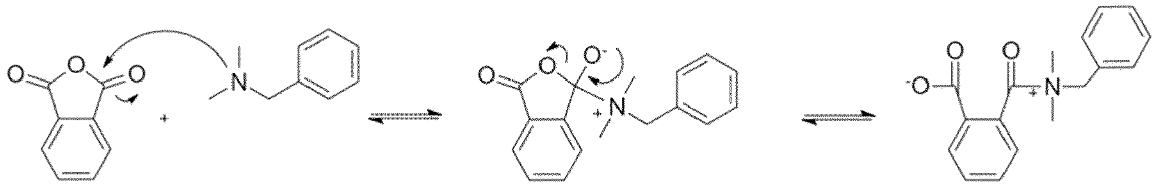

The more reactive variant of phthalic anhydride is formed. This molecule may either directly react with an epoxide group of the resin, or undergo a reaction with the hydroxy-group which takes the place of the bonded BDMA, as explained below.

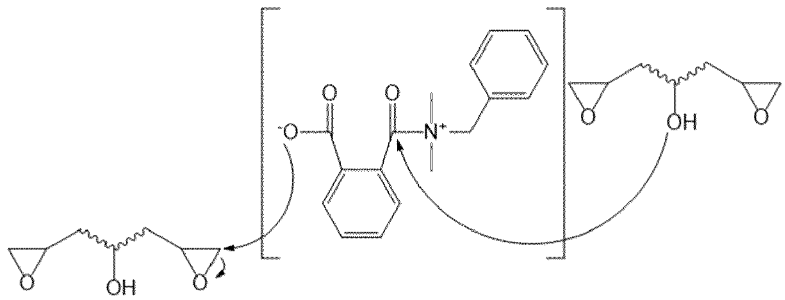

The mechanism is continued with the second option in which the hydroxyl group of the resin attacks the anhydride. Crosslinking now occurs. During this step the hydrogen of the hydroxyl group shifts to the BDMA forming +NHR, as is explained below.

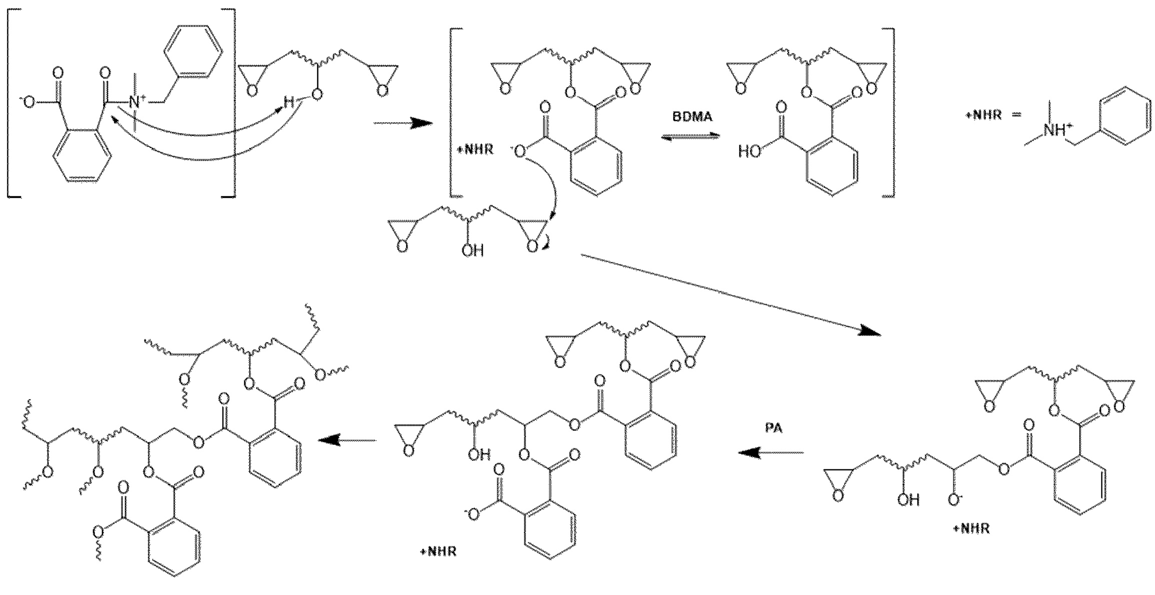


Finally, the negatively charged oxygen attacks an epoxy group of another chain and forms the crosslinking network. This reaction continues until in principle no reactive groups are left. The catalyst is then regenerated, as explained below.

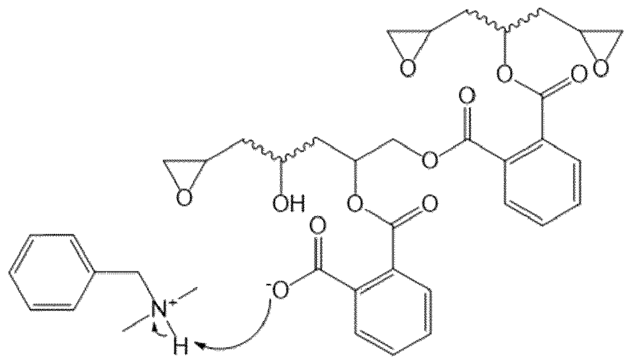

Advantageously, bisphenol A epoxy resins have low levels of aliphatic hydroxyls to initiate cure with anhydrides. Also, every time a carboxylic acid group reacts with an epoxy group, another aliphatic hydroxyl is created, and is then available to react with another anhydride group.

Advantageously, the bio-based 3-MPA and/or DMPA of the invention have very low levels of residual carboxylic acid. These acid groups can react with epoxy groups to initiate cure and to create more aliphatic hydroxyl groups to cure with anhydride groups.

The stoichiometry of the (A) bio-based 3-MPA and/or DMPA and (B) the epoxy functional binder has a functional group ratio of A : B in the range of from 1 : 0.05 to 1 : 10, preferably in the range from 1:0.5 to 1:5. In the most preferred case the total of anhydrides in the resin composition is one mole of anhydride per mole of epoxy.

High crosslinking is preferably obtained in some cases where each epoxy molecule is connected to about four anhydride molecules and each anhydride molecules is connected to two epoxy molecules. The high degree of aromaticity cross linking usually leads to outstanding thermal stability and abrasive resistance.

Advantageously, the resin composition furthermore comprises (C) a co-polymer. An example of a co-polymer is glycidyl end-capped Mn: 377 g/mol: glycidyl end-capped is a versatile co-polymer with an average Mn of 377.

Furthermore, in a preferred embodiment fatty acids can be added as co-polymer, or they can even replace the epoxy functional groups. Public opinion leans more and more towards the replacement of controversial epoxy compounds with bio-based and non-hazardous alternatives. A preferred replacement are vegetable oils (VOs), as they constitute the single, largest, renewable, low cost, non-toxic and biodegradable family yielding materials that are capable of competing with fossil fuel derived petro-based products. Structure, composition, functionality and epoxy material performances vary across vegetable oils nature. A preferred group of vegetable oils are used as triglycerides. Triglycerides (from 95% to 99%) are comprised of three fatty acids joined at a glycerol junction. Fatty acid varies from 8 to 28 carbons in length, with 0 to 6 double bonds and may even contain functional groups. Preferably, as co-polymer, saturated fatty acids, for example caprylic acid, capric acid, lauric acid, myristic acid, palmitic acid and/or stearic acid may be used. Furthermore, unsaturated fatty acids may be used, such as palmitoleic acid, oleic acid, linoleic acid, linolenic acid and/or alpha-eleostearic acid. Also functional fatty acids, such as ricinoleic acid and/or vernolic acid may be used. During the epoxidation process, double bonds are converted into epoxy rings.

Preferably, the weight ratio between (A+B) the epoxy functional binder resin forming poly-epoxide plus bio-based 3-MPA and/or DMPA and (C) the co-polymer is in the range of from 20:1 up to 1:1.

Preferably, the epoxy functional binder is one or more out of the group of epoxidized cycloaliphatic anhydrides, epoxidized vegetable oils, novolac epoxy resins and/or epoxidized bisphenol A.

Advantageously, the co-polymer is soluble in reaction product, preferably is one or more out of the group of polyamides, block co-polymers, polyethylene oxides, carboxylic acids, polybutadienes, acrylics and benzoxazines.

Catalysts or cure accelerators are generally used to speed the cure process and to achieve desired performance characteristics. Various materials may be used to catalyse the reaction between anhydrides and epoxies. In a preferred embodiment of the invention, the resin composition furthermore comprises (D) a catalyst. In a further preferred embodiment, the composition furthermore comprises (D) at least one catalyst in the molar ratio of anhydride to catalyst within the range of about 10:1 up to about 10000:1, preferably 20:1 up to about 200:1.

Tertiary amines are effective catalysts. Commonly used examples are benzyldimethylamine (BDMA), dimethylaminomethylphenol, 2,4,6-tris(dimethylaminomethyl) phenol. Liquid imidazoles are also frequently used to catalyse anhydride-epoxy reactions. Commonly used imidazoles include 2-ethyl-4-methyl imidazole, 1-methyl imidazole and 1-benzyl-2-methyl imidazole. A disadvantage of the tertiary amines and imidazoles is that they generally give significant amber or brown color to cured systems.

Quaternary ammonium salts, like benzyltriethylammonium chloride (BTEAC), benzyltrimethyl ammonium chloride (BTMAC), or tetrabutyl ammonium bromide (TBABr) might also be used. However, as they are solid salts, they must be dissolved in a suitable liquid like ethylene glycol or methanol so that they can be adequately mixed into a liquid

anhydride. Quaternary ammonium salts have the advantage that they promote lower color cures.

Organometallic salts based on tin, zinc, or chromium can also be used. The chromium salts are generally green and give a significant green color to the epoxy-anhydride matrix. Tin and zinc salts are preferred, as they can give relatively colorless cures. Other catalysts which are less toxic are preferred, such as LiOH and HCl.

The composition of the invention comprises (A) a bio-based 3-MPA and/or DMPA. It is preferred that at least 50 wt% is the bio-based 3-MPA and/or DMPA, more preferably at least 70 wt% is the bio-based 3-MPA and/or DMPA, even more preferably at least 80 wt% is the bio-based 3-MPA and/or DMPA, even more preferably at least 90 wt% is the bio-based 3-MPA and/or DMPA, even more preferably at least 95 wt% is the bio-based 3-MPA and/or DMPA, and most preferably at least 98 wt% is the bio-based 3-MPA and/or DMPA. Most preferred is that no other anhydrides are present in the resin composition.

In case other anhydrides are present, these might be fossil-based anhydrides. Suitable fossil-based anhydrides that might be present are alicyclic and aromatic anhydrides. These anhydrides include phthalic anhydride (PA), tetrahydrophthalic anhydride (THPA), hexahydrophthalic anhydride (HHPA), methyltetrahydrophthalic anhydride (MTHPA), hexahydro-4-methylphthalic anhydride (4-MHHPA) and or Nadic® methyl anhydride (NMA). These anhydrides might be blended with themselves and/or with bio-based 3-MPA and/or DMPA.

Advantageously, the composition of the invention further comprising alicyclic and/or aromatic anhydrides and/or acids.

The present invention is also directed to the process for the preparation of a resin composition, wherein at least a bio-based 3-MPA and/or DMPA is added it to an epoxy functional binder, wherein the functional group of A : B is in the range of from 1 : 0.05 to 1 : 10, and wherein the bio-based 3-MPA and/or DMPA is added to the epoxy functional binder, followed by curing. One of the advantages of using bio-based 3-MPA and/or DMPA is that it reduces the viscosity of the non-cured resin. Preferably, the epoxy resin functional binder, and the curing agent (B) are mixed at temperatures between 0°C to 100°C, preferably between 30°C to 70°C, more preferably between 40°C to 60°C.

The sequence of mixing can have a marked effect on the properties of the cured epoxy resin. In the preferred situation that a catalyst is being used, direct addition of an amine catalyst to the anhydride is not preferred, as a darker color may result. It is preferred to add the accelerator to the bio-based 3-MPA and/or DMPA or to another anhydride before contacting it with the resin. To obtain the best properties, the following sequence of steps is preferred:

(1) Mix anhydride and epoxy resin;
(2) Add the accelerator;
(3) Mix until completely uniform.
(4) Cure the material.

As the bio-based 3-MPA and/or DMPA are solids, it is preferred to liquify and/or dissolve the solid materials prior to adding it to an epoxy functional binder.

Advantageously, the resulting reaction mixture is transferred to a mould or surface, such that the reaction mixture flows and fills the mould and the reaction mixture then cures into a mould and/or onto a surface. Preferably, the mould contains fibrous materials.

Curing an epoxy resin may preferably be carried out in one or more stages depending on the rate of reaction and the exotherm of the mixture. Better control might be achieved by curing at a lower temperature. Advantageously, a slow initial cure is followed by a post-cure at a higher temperature which usually results in the best yields. Using this approach allows the reaction to proceed more slowly and the associated exotherm is lower. This results in better color and fewer stresses in the cured epoxy resin. The post-cure anneals the resin thus relieving any stresses which may be present after the initial cure.

The cure cycle used affects the system performance. The cure cycle includes the initial time and temperature used to cure the formulation, as well as all post-cure times and temperatures used to improve performance properties. This is important because longer cure times and higher cure temperatures promote increases in crosslinking. Higher crosslinking results in higher levels of mechanical strength and chemical resistance. A typical example of a cure cycle for curing liquid epoxy resins is 2 hours at 90° C, plus 4 hours at 165° C, plus up to 16 hours at 200° C. Another typical example of a cure cycle for curing bisphenol-A-epoxy resins is 1 hour at 90°C, plus 1.5 hours at 135°C. Preferably, curing takes place in at least two cycles, wherein the first cycle is at lower temperature than the second cycle, preferably the temperature in the first cycle is in the range of from 10°C to 100°C, more preferably in the range of from 60°C to 90°C and the temperature in the second cycle is in the range of from 60°C to 200°C, more preferably in the range of from 100°C up to 150°C.

The present invention is additionally directed to the use of bio-based 3-MPA and/or DMPA as a curing agent in an epoxy resin composition.

Surprisingly, by using bio-based 3-MPA and/or DMPA as a curing agent in epoxy resins, some properties were better than expected. Advantageously, by using bio-based 3-MPA and/or DMPA as a curing agent a decrease in the viscosity of the epoxy resin composition before curing was observed.

Advantageously, using 3-MPA and/or DMPA as a curing agent in epoxy resins an increase in cross-linking degree was measured.

Preferably, bio-based 3-MPA and/or DMPA is used as curing agent to improve the thermal properties of the epoxy resin composition, preferably the glass transition temperature, and/or the degradation temperature.

Preferably, bio-based 3-MPA and/or DMPA is used to improve the mechanical properties of the epoxy resin composition, preferably shore hardness, tensile strength, shear strength, young modulus, flexural elongation, and/or stress and strain at break.

Advantageously, bio-based 3-MPA and/or DMPA is used to improve dielectric properties of the epoxy resin composition preferably relative permittivity.

Advantageously, bio-based 3-MPA and/or DMPA is used to improve chemical resistance of the epoxy resin composition, preferably the chemical resistance to water, alcohol, acids and bases, more preferably the chemical resistance to water, ethanol and sodium hydroxide.

Materials can be added to tailor the properties. Preferably, furthermore fibrous materials are added to the composition.

The following, non-limiting figures and examples are provided to illustrate the invention.

Fig. 1 illustrates the glass transition temperature comparison of PA and 3-MPA cured epoxy thermosets.
Fig. 2 illustrate self-made silicone mould for the tensile and impact bars (top) and self-made silicone moulds for the shear samples (bottom).
Fig. 3 illustrates the cross-linking degree of PA and 3-MPA at different concentrations of cured epoxy thermosets. A concentration of PA 0:75 corresponds with a ratio epoxy resin to anhydride of 1:0.75.

Examples

Experiments were conducted to demonstrate if the biobased 3-MPA was suitable for use in epoxy resin formulations and to test whether properties of the resins were at least comparable to fossil-based equivalents or even improved. The materials and tests that were performed were according to the following ISO standards:

List of ISO methods

- ISO 3673-2 Plastics - Epoxy resins - Part 2: Preparation of test specimens and determination of properties of crosslinked epoxy resins
- IEC 60455-3-8 Resin based reactive compounds used for electrical insulation - Part 3-8: Specifications for individual materials - Resins for cable accessories.
- ISO 11003-2 Adhesives - Determination of shear behaviour of structural adhesives - Part 2: Tensile test method using thick adherends
- ISO 10365 Adhesives - Designation of main failure patterns.
- IEC 62631-2-1 Dielectric and resistive properties of solid insulating materials - Part 2-1: Relative permittivity and dissipation factor - Technical frequencies (0,1 Hz to 10 MHz) - AC Methods (IEC 62631-2-1:2018, IDT)
- ISO 62 Plastics - Determination of water absorption.
- ISO 175 Plastics - Methods of test for the determination of the effects of immersion in liquid chemicals.
- ISO 868 Plastics and ebonite - Determination of indentation hardness by means of a durometer (Shore hardness)
- ISO 527-1 Plastics - Determination of tensile properties - Part 1: General principle
- ISO 527-2 Plastics - Determination of tensile properties - Part 2: Test conditions for moulding and extrusion plastics.

List of abbreviations:

PA - phthalic anhydride

3-MPA - 3-methyl phthalic anhydride

3,6-DMPA - 3,6-dimethyl phthalic anhydride

DSC - differential scanning calorimetry

HD - shore hardness

THF - tetrahydrofuran

TGA - thermogravimetric analysis

PLA - poly lactic acid

ISO - international Standard O...

LCR - Inductance (L), Capacitance (C), Resistance (R)

IEC - international electrotechnical commission

Mn - Molar weight

BDMA - N,N-dimethylbenzylamine

DMA - N,N-dimethylaniline

DGEBA - Bisphenol A diglycidyl ether

DAR332 - Poly(bisphenol A-co-epichlorohydrin) glycidyl end-capped

Td - Degradation temperature

Tg - Glass transition temperature

List of materials used in the examples:

The chemicals that have been used during this research are listed here:

Phthalic anhydride, 99% (Sigma Aldrich);
Poly(bisphenol A-co-epichlorohydrin) glycidyl end-capped, Mn ~377 (Sigma Aldrich);
N,N-Dimethylbenzylamine, ≥99% (Sigma Aldrich);
3-Methyl Phthalic Anhydride, ≥99.5% (Relement);
3,6-Dimethyl Phthalic Anhydride, ≥99.5% (Relement);
tetrahydrofuran HPLC grade (macron fine chemicals).

The equipment and materials that are were used during this research are listed here:

DSC Q20 TA instruments;
TGA Q500-2437 TA instruments;
Voltcraft VC950 LCR-meter;
Programmable oven.

Example 1: Preparation of epoxy resins

The samples were made with a 1:1 stoichiometric ratio of resin (DAR332) and an anhydride analogue, with the addition of 1.5 wt% DMA or BDMA as catalyst. For this experiment only 0.5 g of resin was used for each sample. The samples were made in 10 mL glass vials, using a water bath at 90°C. The resin was first heated, whereafter the curing agent was mixed in vigorously. After reaching complete homogeneity, the catalyst was weighed directly into the vial. Directly after adding the catalyst the sample was mixed again for a couple seconds and then immediately cooled on ice, to prevent the crosslinking reaction. The sample was kept as cool as possible in between measurements.

Example 2: Curing of epoxy resins / making epoxy thermosets

The samples were made with a 1:1 stoichiometric ratio of resin (DAR332) and anhydride analogue, with the

addition of 1.5 wt% DMA or BDMA as catalyst. The resin was measured directly in the aluminium pans and heated up to 90°C using a heating plate with the thermocouple placed in the resin. After reaching 90°C the hardener (powder/crystals) was added and mixed in as fast as possible using a magnetic stirrer. After reaching complete homogeneity the catalyst was weighed of directly in the sample and the sample was homogenized again. Finally, the samples were placed in a preheated oven at 90°C for 24h. After the curing process, the samples were cooled to room temperature before removing them from the aluminium pans.

Example 3: DMPA as curing agent

The samples were made with a 1:1 stoichiometric ratio of resin (DAR332) and anhydride analogue, with the addition of 1.5 wt% DMA or BDMA as catalyst. The resin was measured directly in the aluminium pans and heated up to 100°C using a heating plate with the thermocouple placed in the resin. After reaching 100°C the hardener (powder/-crystals) was added and mixed in as fast as possible using a magnetic stirrer. After reaching complete homogeneity the catalyst was weighed of directly in the sample and the sample was homogenized again. Finally, the samples were placed in a preheated oven at 100°C for 1 hour and at 135°C for 1.5 hours. After the curing process, the samples were cooled to room temperature before removing them from the aluminium pans.

Example 4: Comparing properties of PA and bio-MPA cured epoxy thermosets

Three different sample ratios of resin to anhydride analogue were compared: 0.75:1, 1:1 and 1:1.5. The samples were prepared by heating up the resin in a suitable container, preferably the mould itself. When the desired temperature was reached, the ground up anhydride was added and mixt until it was completely dissolved. Subsequently, 1.5 wt% of BDMA was added directly to the solution and thoroughly mixed until homogeneous. The samples with PA were mixed at 90-100°C, and those with 3-MPA were mixed at 90-95°C. The higher temperature was needed to completely dissolve PA. 3-MPA dissolves faster and better than PA. The cure program was kept at 90°C for 1 h, followed by 135°C for 1.5 h. After the cure time the samples were let to cool to room temperature in the mould, and eventually removed for measuring and testing.

**DSC analysis**

DSC analysis was used to obtain Tg. The test was performed in duplicate utilizing the broken tensile bars. The DSC program that was used to determine the total reaction enthalpy, consisted of the following steps: Equilibrated at -50°C, ramped up to 75°C with 20°C/min, ramped up to 185°C with 5°C/min, cooled to - 50°C with 10°C/min and finally ramped up to 185°C with 20°C/min.

To determine the conversion, the rest enthalpy at different hold times, the program consisted of the following steps: Jumped to 110°C, isothermal hold for 5/10/15/30 min, cooled to -50°C with 10°C/min, ramped up to 75°C with 20°C/min, and finally ramped up to 185°C with 5°C/min.

**TGA analysis**

The TGA method included ramping up the oven temperature to 600°C with 20°C/min (Q500-2437 TA instruments). This test was performed in duplicate and measured on broken tensile bars.

**Gel content test**

The methodology that was used for the gel-content consisted of weighing ~0.4g of the samples prior to submerging them in THF for a total of 4 days and refreshing the solvent after 2 days. Hereafter, the samples were dried for 24 h on 140°C. Gel content was determined with the calculation:

$$Gel\ content = 100 - \frac{(m_{prior} - m_{post})}{m_{prior}} * 100.$$

The test was performed in duplicate utilizing broken tensile bars.

**Water absorption test**

This test was based on ISO 62 and ISO 175, executed in duplicate. Broken tensile bars were used as samples.

About 0.7 g of sample was weighed prior to submerging them in the solvent for a total of seven days. Subsequently, the samples were wiped down and weighed again to determine the mass balance. This was executed in duplicate.

**Shore hardness**

Disposable aluminium pans with a diameter of 45 mm were used to create samples. In order to measure the shore hardness of the materials a durometer was used. The methodology of ISO 868 was followed for this test. It consisted of a 5-point measurement on a sample of at least 4 mm thick. The average was taken as result.

**Tensile test**

The tensile samples were made according to ISO 527 (2x4x80mm), using a silicone mould corresponding with ISO 527 (dumbbell shape 2x4x80 mm). The silicone mould was dried in the oven (>100°C) before casting the resin in. Prior to testing the samples were measured and checked on homogeneity and bubble entrapment. The testing speed was set to 1 mm/min, and an outlier test was used on the resulting data. Values were compared according to IEC 60455-3-1.

**Single lap shear test**

A single lap shear test was used to determine the shear strength. This test was executed according to ISO 11003-2, on the universal testing apparatus. The substrate that was chosen was PLA 3052D impact bars. The formulation was first prepared as usual, whereafter it was rapidly cooled down to -20°C by placing it in a freezer. After freezing, 20 mg of formulation was applied to the impact bars on the area of overlap (~34x10 mm). The samples were placed in a silicone mould (Fig 4.) and cured in the oven at 135°C for 30 min. Hereafter, the samples were left to rest in the mould for 5 min, and eventually removed and stored overnight. The test was performed the next day by placing the specimens in the testing apparatus, and tested at 0.5 mm/min.

**Dielectric property testing**

The principles to test dielectric properties were derived from IEC 62631-2-1. Using a Voltcraft VC950 LCR-meter, the capacitance was measured which allowed for calculation of relative permittivity. IEC 60455-3-1 states a maximum relative permittivity of 5 for unfilled epoxy systems. Shore hardness samples were reused, and aluminum foil and silicone spray were used to create electrodes. The capacitance was measured in nano-farad, and the relative permittivity was calculated with the following equation:

$$\varepsilon_r = \frac{C * h}{\varepsilon_0 * A}$$

with

C: Capacitance that is measured;
h: Height/thickness of the sample;
ε0: Permittivity in vacuum;
A: Area of electrodes.

**Table 1. Experimental outcome of property testing**

| **Sample ratio** Epoxy functional binder to curing agent | | PA 1:0.75 | PA 1:1 | PA 1:1.5 | MPA 1:0.75 | MPA 1:1 | MPA 1:1.5 |
|---|---|---|---|---|---|---|---|
| Thermal analysis | Glass transition temperature $T_g$ in °C | 81.9 | 94.2 | 127.3 | 85.9 | 100.6 | 138.5 |
| | Weight loss temperature $T_{5\%}$ in °C | 360.5 | 395.2 | 369.0 | 355.7 | 356.7 | 357.5 |
| Gel content analysis | Soluble fraction | 11.6 | 7.0 | 1.1 | 12.6 | 6.6 | 0.1 |
| | Crosslinking degree (%) | 88.4 | 93.0 | 98.9 | 87.4 | 94.4 | 99.9 |

(continued)

| **Sample ratio** Epoxy functional binder to curing agent | | PA 1:0.75 | PA 1:1 | PA 1:1.5 | MPA 1:0.75 | MPA 1:1 | MPA 1:1.5 |
|---|---|---|---|---|---|---|---|
| Chemical resistance: Absorption (%) | Water | 0.8 | 0.5 | 0.6 | 0.7 | 0.5 | 0.5 |
| | Ethanol | 1.5 | 0.2 | 0.0 | 1.5 | -0.1 | -0.1 |
| | Sodium Hydroxide | 0.7 | 0.7 | 0.6 | 0.6 | 0.4 | 0.4 |
| Single lap shear test - maximum load (Mpa) | | 837.9 ±7.5 | 835.8 ±61.3 | 855.1 ±299.5 | 575.8 ±213.5 | 828.1 ±95.3 | 969.6 ±90.9 |
| Tensile test | Stress at break (MPa) | 69.7 ±8.0 | 67.4 ±10.5 | 86.8 ±2.9 | 66.1 ±9.0 | 79.3 ±1.5 | 77.0 ±15.7 |
| | Strain at break (%) | 3.62 ±0.36 | 3.65 ±0.17 | 5.52 ±0.42 | 3.33 ±0.52 | 4.45 ±0.17 | 4.28 ±1.14 |
| Shore hardness (D) | | 84.9 | 85.8 | 85.1 | 85.9 | 86.1 | 87 |
| Relative permittivity | | 7.24 | 8.85 | 5.23 | 7.2 | 11.48 | 8.73 |

The outcomes delineated above furnish grounds for several deductions regarding the efficacy of phthalic anhydride analogues within epoxy systems. Initially, the substitution of phthalic anhydride with 3-methylphthalic anhydride (3MPA) facilitated the curing of epoxy resin in the presence of a tertiary amine catalyst.

Phthalic anhydride exhibits a propensity to vaporize at approximately 90°C, necessitating temperatures between 95-100°C for efficient dissolution within the resin.

In contrast, 3-MPA exhibits accelerated dissolution kinetics, thereby demonstrating superior handleability over PA. Moreover, 3-MPA engenders products with elevated glass transition temperatures (Tg) in comparison to those derived from PA. On the contrary, the reactivity of curing velocity comparisons yields the sequence: PA > 3-MPA.

The findings indicate that, in terms of chemical resistance, tensile strength, and shore hardness, 3-MPA outperforms PA marginally. Regarding dielectric properties, the 3-MPA system exhibits enhanced electrical conductivity relative to the thermoset incorporating PA.

Most notably, 3-MPA demonstrates a conspicuous superiority during single lap shear adhesion testing. Notably, when the ratio of 3-MPA is set stoichiometrically or in excess, nearly all samples manifest substrate breakage, underscoring the markedly superior adhesion properties of the 3-MPA formulation compared to PA.

A comprehensive summary of all findings is tabulated below.

**Table 2. Summary of the properties of the prepared resin**

| **Property** | **Performances PA vs 3-MPA** | **Values found compared to existing literature** |
|---|---|---|
| $T_g$ | 3-MPA gives higher Tg | Good |
| $T_{5\%}$ | Similar, on average 3-MPA has a $T_{5\%}$ 5.3°C lower | Good |
| Gel content | 3-MPA slightly lower (higher % cross linking) | Good |
| Water absorption | 3no significant difference | Good |
| EtOH absorption | 3-MPA slightly less absorption | Good |
| NaOH absorption | 3-MPA slightly less absorption. | Good |
| Shore hardness | Similar, on average 3-MPA lies 1.3 higher on the HD scale | Good |
| Tensile stress at break | 3-MPA only better in the 1:1 ratio | Good |
| Shear Max load | Type of breakage indicates significant better performance for 3-MPA, but data processing or method needs to be optimized | - |

(continued)

| Property | Performances PA vs 3-MPA | Values found compared to existing literature |
|---|---|---|
| Relative permittivity | 3-MPA relative permittivity was higher | both PA and 3-MPA don't meet the requirement from the ISO norm |

## Claims

1. An epoxy resin composition comprising (A) an epoxy functional binder resin forming poly-epoxide, (B) bio-based 3-MPA and/or DMPA wherein a functional group ratio of A : B is in the range of from 1 : 0.05 to 1 : 10.

2. Composition according to claim 1, wherein the composition furthermore comprises (C) a co-polymer.

3. Composition according to claim 1 or 2, wherein the composition furthermore comprises (D) at least one catalyst in the molar ratio of anhydride to catalyst within the range of about 10:1 up to about 10000:1, preferably 20:1 up to about 200:1.

4. Composition according to any of the previous claims, wherein the weight ratio between (A+B) the epoxy functional binder resin forming poly-epoxide plus bio-based 3-MPA and/or DMPA and (C) the co-polymer is in the range of from 20:1 up to 1:1.

5. Composition according to any of the previous claims, wherein the epoxy functional binder is one or more out of the group of epoxidized cycloaliphatic anhydrides, epoxidized vegetable oils, and/or epoxidized bisphenol A.

6. Composition according to any of the previous claims, wherein the co-polymer is soluble in reaction product, preferably is one or more out of the group of polyamides, block co-polymers, polyethylene oxides, carboxylic acids, polybutadienes, acrylics and benzoxazines.

7. Composition according to any of the previous claims, further comprising alicyclic and/or aromatic anhydrides and/or acids.

8. Process for the preparation of an epoxy resin composition, wherein at least a bio-based 3-MPA and/or DMPA is added to an epoxy functional binder, wherein the functional group of A : B is in the range of from 1 : 0.05 to 1 : 10, and wherein the bio-based 3-MPA and/or DMPA is added to the epoxy functional binder, followed by curing.

9. Process according to claim 8, wherein the epoxy resin functional binder, and the curing agent (B) are mixed at temperatures between 0°C to 100°C, preferably between 30°C to 70°C, more preferably between 40°C to 60°C.

10. Process according to claim 8 to 9, wherein the resulting reaction mixture is transferred to a mould or surface, such that the reaction mixture flows and fills the mould and the reaction mixture then cures into a mould and/or onto a surface.

11. Process according to claim 8 to 10, wherein curing takes place in at least two cycles, wherein the first cycle is at lower temperature than the second cycle, preferably the temperature in the first cycle is in the range of from 10°C to 100°C, more preferably in the range of from 60°C to 90°C and the temperature in the second cycle is in the range of from 60°C to 200°C, more preferably in the range of from 100°C up to 150°C.

12. Use of bio-based 3-MPA and/or DMPA as a curing agent in an epoxy resin composition.

13. Use according to claim 12, to decrease the viscosity of the epoxy resin composition before curing.

14. Use according to claim 12 to 13, to improve the thermal properties of the epoxy resin composition, preferably the glass transition temperature, and/or the degradation temperature.

15. Use according to claim 12 to 14 to improve the mechanical properties of the epoxy resin composition, preferably shore hardness, tensile strength, shear strength, young modulus, flexural elongation, and/or stress and strain at break.

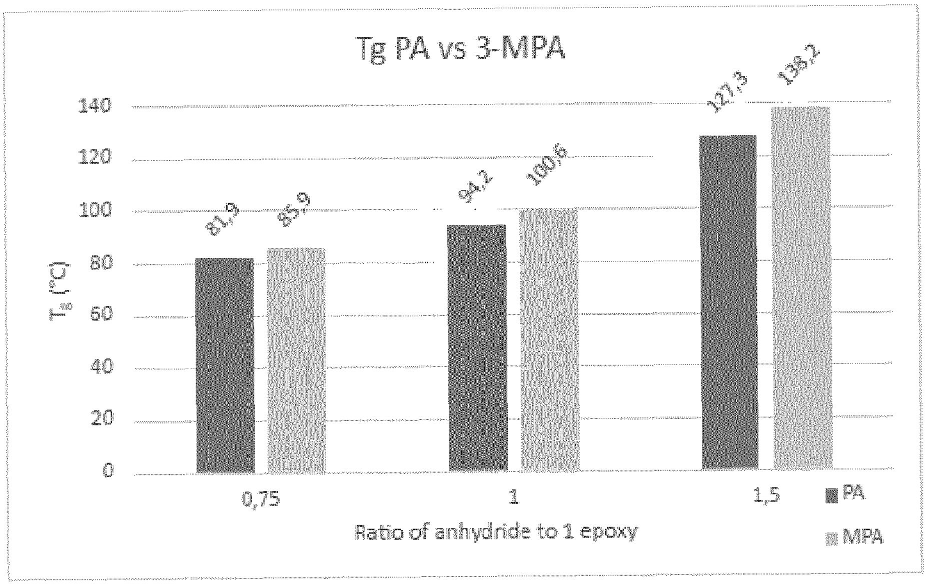
Tg PA vs 3-MPA
140
120
100
80
60
40
20
0
$T_g$ (°C)
81,9
85,9
94,2
100,6
127,3
138,2
0,75
1
1,5
Ratio of anhydride to 1 epoxy
PA
MPA

Fig. 1

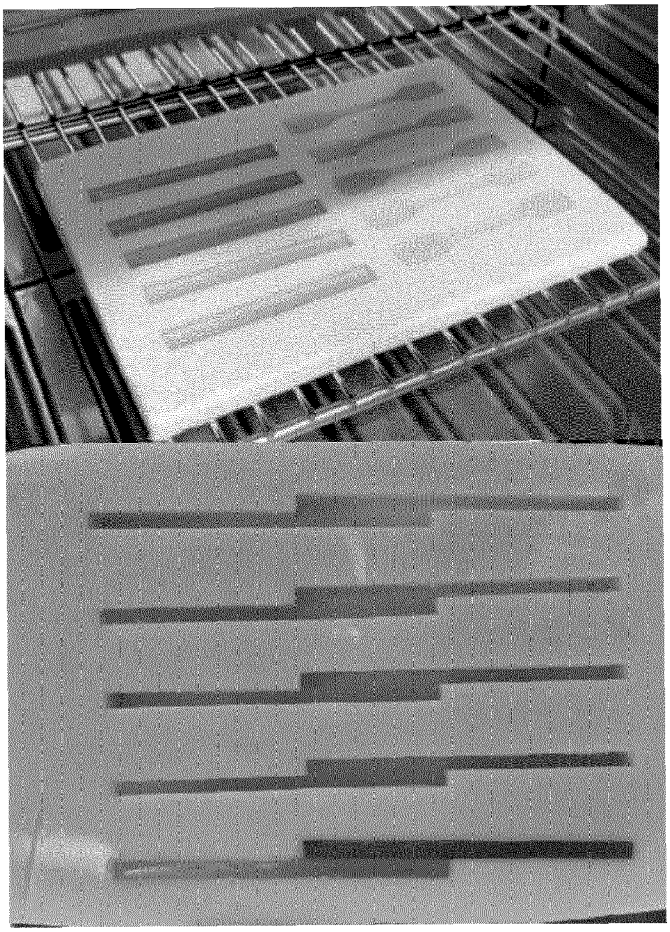

Fig. 2

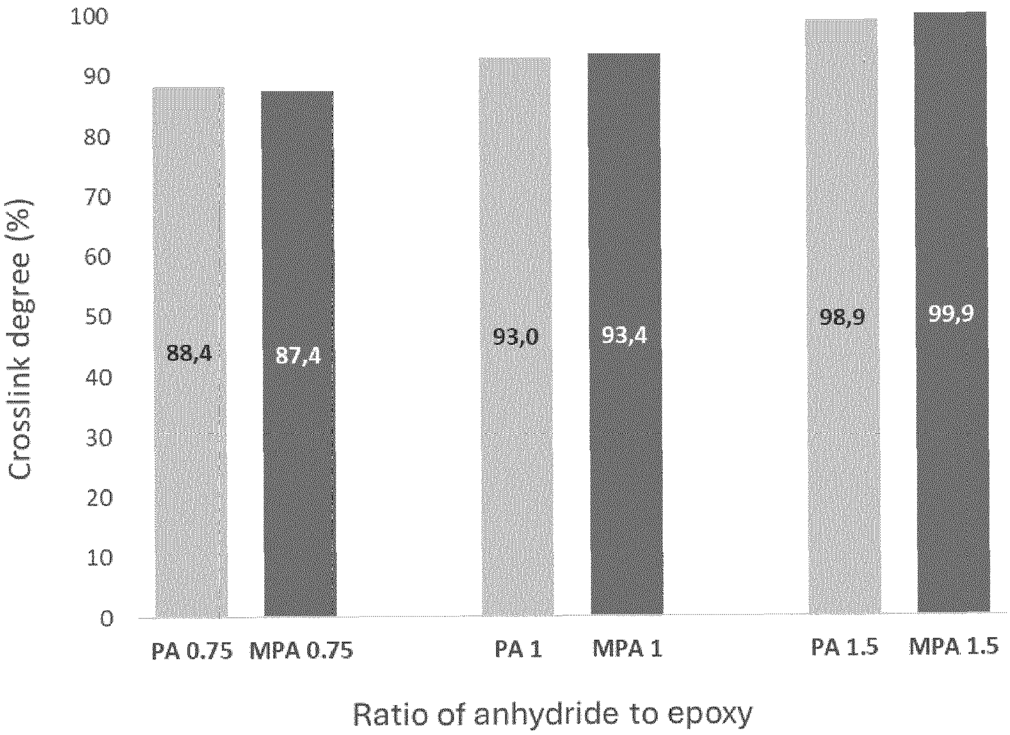
100
90
80
70
60
50
40
30
20
10
0
Crosslink degree (%)
88,4
87,4
93,0
93,4
98,9
99,9
PA 0.75
MPA 0.75
PA 1
MPA 1
PA 1.5
MPA 1.5
Ratio of anhydride to epoxy

Fig. 3

Europäisches Patentamt
European Patent Office
Office européen des brevets

# EUROPEAN SEARCH REPORT

Application Number
EP 24 17 1470

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | Relement: "Relement successfully completed pilot plant run for bio MPA", , 6 July 2023 (2023-07-06), XP093210825, Retrieved from the Internet: URL:https://www.relement.eu/relement-successfully-completed-pilot-plant-run-for-bio-mpa [retrieved on 2024-10-01] * the whole document * | 1-12 | INV. C08G59/42 C09D163/00 |
| A | US 2003/166747 A1 (ROCKS JENS [CH] ET AL) 4 September 2003 (2003-09-04) * paragraph [0046] * | 1-15 | |
| A | WO 2021/066658 A1 (TNO [NL]) 8 April 2021 (2021-04-08) * paragraph [0254]; table 7 * | 1-15 | |
| A | US 2022/306837 A1 (ZGELA DOMINIK [DE] ET AL) 29 September 2022 (2022-09-29) * the whole document * | 1-15 | TECHNICAL FIELDS SEARCHED (IPC): C08G C09D |

The present search report has been drawn up for all claims

| Place of search | Date of completion of the search | Examiner |
|---|---|---|
| The Hague | 2 October 2024 | Hoffmann, Michael |

2

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 24 17 1470

This annex lists the patent family members relating to the patent documents cited in the above-mentioned European search report. The members are as contained in the European Patent Office EDP file on
The European Patent Office is in no way liable for these particulars which are merely given for the purpose of information.

02-10-2024

| Patent document cited in search report | Publication date | Patent family member(s) | Publication date |
|---|---|---|---|
| US 2003166747 A1 | 04-09-2003 | AT E277103 T1 | 15-10-2004 |
| | | CN 1435444 A | 13-08-2003 |
| | | EP 1331234 A1 | 30-07-2003 |
| | | JP 2004002675 A | 08-01-2004 |
| | | US 2003166747 A1 | 04-09-2003 |
| WO 2021066658 A1 | 08-04-2021 | EP 3800174 A1 | 07-04-2021 |
| | | EP 4041705 A1 | 17-08-2022 |
| | | US 2022363624 A1 | 17-11-2022 |
| | | WO 2021066658 A1 | 08-04-2021 |
| US 2022306837 A1 | 29-09-2022 | BR 112021026848 A2 | 22-02-2022 |
| | | CN 114207024 A | 18-03-2022 |
| | | DE 102019121195 A1 | 11-02-2021 |
| | | EP 4010399 A1 | 15-06-2022 |
| | | ES 2959013 T3 | 19-02-2024 |
| | | JP 7536082 B2 | 19-08-2024 |
| | | JP 2022543829 A | 14-10-2022 |
| | | KR 20220043114 A | 05-04-2022 |
| | | PL 4010399 T3 | 11-12-2023 |
| | | US 2022306837 A1 | 29-09-2022 |
| | | WO 2021023593 A1 | 11-02-2021 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 4041705 A
- EP 3844165 A

### Non-patent literature cited in the description

- *CHEMICAL ABSTRACTS*, 4792-30-7
- *CHEMICAL ABSTRACTS*, 37102-74-2
- *CHEMICAL ABSTRACTS*, 944-38-7
- *CHEMICAL ABSTRACTS*, 5463-50-3